# EUROPEAN PATENT SPECIFICATION

(11) **EP 2 609 010 B1**
(45) Date of publication and mention of the grant of the patent: **06.04.2016**
(21) Application number: 11745934.7
(22) Date of filing: 12.08.2011
(51) Int. Cl.: E05D 15/58, B64D 11/04, F25D 23/08

(54) **SEALING SYSTEM WITH A POSITIONING DEVICE**
ABDICHTUNGSSYSTEM MIT EINER POSITIONIERUNGSVORRICHTUNG
SYSTÈME D'ISOLEMENT AVEC DISPOSITIF DE POSITIONNEMENT

(30) Priority: 25.08.2010 US 376714 P; 25.08.2010 DE 102010035372
(43) Date of publication of application: 03.07.2013
(73) Proprietor: Airbus Operations GmbH, 21129 Hamburg (DE)
(72) Inventor: SEECK, Joerg, 22880 Wedel (DE); BRUNSWIG, Hans, 22589 Hamburg (DE)
(74) Representative: Schicker, Silvia
(86) International application number: PCT/EP2011/004081
(87) International publication number: WO 2012/025200

(56) References cited:
- DE-A1- 2 647 724
- DE-A1- 19 952 523
- DE-C- 872 849
- DE-U1- 9 408 795
- DE-U1-202006 004 162

## Description

The invention relates to a sealing system, which is suitable for use in an aircraft device that is to be sealed off from the environment, and to an aircraft device that is equipped with such a sealing system.

Currently, in modern passenger aircraft food and drink that is provided for catering to aircraft passengers during a flight is stored in trolleys or suitably devised storage cabinets in the region of the galleys before being issued to the aircraft passengers by the cabin crew. In order to keep the food and drink cool prior to consumption, it is known for example from DE 41 05 034 A1 to cool trolleys, which are positioned in the region of the galleys of the aircraft for storing food that is to be kept cool, with the aid of autonomous cooling devices that operate with cold air as a cooling medium and are equipped in each case with an individual compression-type refrigerating machine (air chiller). Alternatively, for example DE 43 40 317 C2 describes a central compression-type refrigerating machine, the refrigerating output of which is distributed via a liquid refrigerant circuit to cooling stations disposed in the region of the aircraft galleys. The cooling stations supplied with cooling energy from the central refrigerating machine transfer this cooling energy via cooling air circuits, which are coupled thermally to the liquid refrigerant circuit of the central refrigerating machine by suitable heat exchangers, to trolleys, standard units (SUs), etc., that are positioned in the region of the galleys of the aircraft for storing food that is to be kept cool.

So-called air-over systems, which may be supplied with cooling energy both from an autonomously operating air chiller and from a central liquid cooling system of the aircraft, comprise a thermally insulated and leak-proofed cooling chamber, which is integrated for example into the galley and through which flows cooling air that is provided by the air chiller or the central liquid cooling system. The trolleys, standard units (SUs), etc., that are loaded with the food to be kept cool may be inserted into the cooling chamber. Trolleys that are suitable for use in an air-over system are themselves not insulated and are cooled by the cooling air flowing over them. The cold input through the trolley wall ensures that the food inside is cooled. Air-through systems are moreover known, in which the cooling energy provided by an autonomously operating air chiller or a central liquid cooling system is supplied directly to an insulated trolley. However, these insulated trolleys may also be provided for storage in a closed chamber of an aircraft galley.

Cooling chambers currently used in modern commercial aircraft are conventionally equipped with a brush seal for leak-proofing the cooling chamber doors relative to a floor of the aircraft cabin. These seals, which during opening and closing of the cooling chamber doors sweep over the floor of the aircraft cabin, are however subject to extreme wear. Furthermore, due to the effect of liquids individual groups of bristles may stick together, thereby impairing the sealing action of the brush seal. As defective or worn seals are often not immediately detected by the maintenance crew and the cabin crew, the situation may therefore arise that a considerable amount of the cooling energy has to be expended to compensate leakage losses. The cooling system therefore has to be designed with a correspondingly high capacity, this having a negative impact on the installation space volume and weight of the cooling system. Cold air leaking from a cooling chamber may moreover have an effect on the air conditions in the area of the aircraft galleys that is unpleasant in particular for the cabin crew.

DE 20 2006 004 162 U1 shows a door with a door hinge for pivotally mounting the door for opening and closing. The door comprises a vertical guide system as well as a spring element on its door hinge for lifting the door. In addition, the door comprises a pusher on its upper edge, the pusher adapted to push the door down against the force of the spring element at the end of its closing motion. Further, the door comprises a bottom seal at its lower edge. The bottom seal only touches the floor when the door is lowered, i.e., the door is closed. In case the door is opened and, thus, lifted, the bottom seal does not touch the floor, i.e., it does not brush on the floor when the door is pivoted.

DE 26 47 724 A1 shows a door lifting and closing mechanism. A door hinge is provided with a spring for pushing the door up, i.e., away from a floor, in its opened position. Further, the mechanism comprises a door latch having an inclined plane, wherein the inclined plane of the door latch serves to push the door downward in direction to the floor, when the door is closed. A rubber strip is provided at the bottom side of the door, the rubber strip being pushed against the floor, when the door is closed.

DE 872 849 C shows a door seal having door hinges inclined such that the door is at the same time lifted, when it is opened, and at the same time lowered, when it is closed. A seal in the form of an elastic strip is provided at a bottom side of the door, wherein the strip is lifted together with the door, when the door is opened, and, thus, does not brush along the floor. However, when the door is in its closed position, the door weight firmly presses the strip onto the floor so that no draught may flow between the bottom side of the door and the floor.

DE 94 08 795 U1 shows a special design of a door hinge, wherein a door mounted to the door hinge is lifted relative to the floor, when the door is opened, and again lowered, when the door is closed. Thus, a good sealing effect is achieved by the door which is provided with a sealing element at its bottom edge.

DE 199 52 523 A1 is directed to a cold air supply arrangement for galley service trolleys on board an aircraft, wherein the arrangement supplies cold air to galley service trolleys that are positioned in on-board galley regions of a passenger aircraft. The arrangement has a cooling machine to which an air supply line is connected for supplying cooling air to at least one galley service trolley. Warmed-up cooling air from the trolley is returned to the cooling machine via a return air line. A jet pump is installed in the cross-section of the air supply line and, at the same time, a bypass air line, branching off the return air line, is connected to the jet pump.

The underlying object of the invention is to provide a sealing system, which is suitable for use in an aircraft device that is to be sealed off from the environment and which makes it possible to minimize leakage losses and at the same time operates with reduced wear and/or a long service life. The invention is further geared to the object of providing an aircraft device that is equipped with such a sealing system.

This object is achieved by a sealing system having the features of claim 1 and by an aircraft device having the features of claim 7.

The sealing system according to the invention is suitable for use in an aircraft device that is to be sealed off from the environment and comprises a door element, which is connectable to a housing of the aircraft device. In its state of connection to the housing of the aircraft device the door element is movable between an open position and a closed position. In its open position the door element clears the door aperture formed in the housing of the aircraft device. In its closed position, on the other hand, the door element closes the door aperture formed in the housing of the aircraft device. For example, the door element may be coupled pivotably to the housing of the aircraft device so that the door element by pivoting relative to the housing of the aircraft device is movable between its open position and its closed position.

The sealing system further comprises a sealing element, on which a sealing surface is formed. The sealing surface of the sealing element is adapted to interact sealingly with a contact surface that lies opposite the sealing face of the sealing element when the door element is situated in its closed position. The sealing element may be fastened to the door element, the housing of the aircraft device or some other aircraft component adjacent to the door element. For example, an arrangement is conceivable, in which a portion of the door aperture formed in the housing of the aircraft device is delimited, not by a portion of the housing of the aircraft device, but by some other aircraft component, for example a cabin floor portion. In such an arrangement the sealing element may be fastened to the other aircraft component formed for example by a cabin floor portion. In a corresponding manner, the contact surface provided for interacting with the sealing surface of the sealing element may be formed on the housing of the aircraft device or on some other aircraft component adjacent to the door element or on the door element.

If the sealing element is fastened to the door element, for example in the region of an outer peripheral surface of the door element, the contact surface is preferably formed on the housing of the aircraft device, for example in the region of an inner peripheral surface of the door aperture, or on an aircraft component adjacent to the door element, for example a cabin floor portion adjoining the door aperture formed in the housing of the aircraft device. If, on the other hand, the sealing element is fastened to the housing of the aircraft device, for example in the region of an inner peripheral surface of the door aperture, or to an aircraft component adjacent to the door element, for example a cabin floor portion adjoining the door aperture formed in the housing of the aircraft device, the contact surface is preferably formed on the door element, for example in the region of an outer peripheral surface of the door element.

The sealing system according to the invention further comprises a positioning device, which is adapted to move the door element substantially at right angles to the sealing surface of the sealing element or to the contact surface between a first position and a second position. When the door element is situated in its first position, the sealing surface of the sealing element is not in sealing contact with the contact surface. In contrast thereto, the sealing surface of the sealing element is in sealing contact with the contact surface when the door element is situated in its second position. The sealing contact that may be established between the sealing surface of the sealing element and the contact surface may be a positive contact or a non-positive contact.

In an operating state of the sealing system, in which the door element does not have to sealingly close the door aperture formed in the housing of the aircraft device, a positioning of the door element in its first position enables an arrangement of the sealing surface of the sealing element at a distance from the contact surface and/or a surface adjacent to the contact surface and hence a reduction of the wear of the sealing element. The sealing system according to the invention therefore makes it possible to minimize wear-related leakages. Given a use of the sealing system according to the invention in an aircraft device that is to be cooled, for example a cooling chamber suitable in particular for receiving a trolley, it is therefore possible to reduce the cooling capacity that is to be provided by a corresponding cooling energy generating system. The cooling energy generating system may therefore be of a less powerful and hence more compact and lightweight design. A reduction of the electrical power consumption of the cooling energy generating system is moreover possible. Finally, as a result of minimizing leakages an impairment of the air conditions in the environment of the aircraft device sealed off from the environment by means of the sealing system according to the invention is also minimized.

In a preferred embodiment of the sealing system according to the invention the positioning device is adapted to move the door element, during a movement of the door element between its open position and its closed position, substantially at right angles to the sealing surface of the sealing element or to the contact surface. In other words, the positioning device is preferably adapted to move the door element between its first position and its second position in parallel to its movement between its open position and its closed position. Consequently, the movement of the door element between its first position and its second position and the movement of the door element between its open position and its closed position are substantially synchronized.

It is consequently guaranteed that the sealing surface of the sealing element is movable into sealing contact with the contact surface once the door element has reached its closed position and that the sealing surface of the sealing element is disposed at a distance from the contact surface or from a surface adjacent to the contact surface so long as the door element is situated in its open position. Such a development of the sealing system according to the invention is particularly advantageous if the sealing element is fastened to the door element, for example in the region of an outer peripheral surface of the door element, and is provided for interacting with a contact surface that is formed on an aircraft cabin floor portion adjoining the door aperture formed on the housing of the aircraft device and/or is formed by this aircraft cabin floor portion. It is self-evident that the contact surface may for example also be formed on the housing of the aircraft device.

The positioning device may comprise a spring element, which is adapted to exert on the door element a spring force, by means of which the door element is moved away from the sealing surface of the sealing element or from the contact surface. The spring force of the spring element therefore pushes the door element into the first position thereof, in which the sealing surface of the sealing element is not movable into sealing contact with the contact surface. The spring element may be disposed for example in the region of a hinge element, by means of which the door element is coupled to the housing of the aircraft device so as to be movable between its closed position and its open position. A first end of the spring element may be supported for example against a bearing element connected to the housing of the aircraft device, while a second end of the spring element may be supported against a further bearing element connected to the door element. The spring element by means of its spring force may then bring about a relative movement of the further bearing element connected to the door element relative to the bearing element fastened to the housing of the aircraft device and hence a movement of the door element relative to the housing of the aircraft device. As an alternative to such a configuration, the positioning device may of course also be equipped with some other, for example mechanical, pneumatic or hydraulic device that brings about a movement of the door element between the first position and the second position thereof. A positioning device equipped with a spring element is however easy and economical to manufacture and does not entail much maintenance.

The positioning device further comprises an activating device, which is adapted to exert on the door element a force, by means of which the door element is moved towards the sealing surface of the sealing element or towards the contact surface. The activating device is therefore preferably adapted to exert on the door element a force that for example opposes a spring force exerted on the door element by a spring element of the positioning device. The activating device may be configured in the form of a further spring element or comprise a further spring element. As an alternative to this, an embodiment of the activating device comprising some other mechanical, pneumatic or hydraulic device is of course conceivable, which is capable of exerting on the door element a corresponding force, by means of which the door element is moved from its first position into its second position.

The activating device comprises a wedge element, which is fastened to an outer peripheral surface of the door element and adapted to interact with an inner peripheral surface of the door aperture that lies opposite the outer peripheral surface of the door element when the door element is situated in its closed position. A wedge surface of the wedge element fastened to the outer peripheral surface of the door element that is provided for interacting with the inner peripheral surface of the door aperture is preferably inclined in such a way that in an outer region of the outer peripheral surface of the door element the wedge surface is at a greater distance from the outer peripheral surface of the door element than in an inner region of the outer peripheral surface of the door element. In other words, the wedge surface of the wedge element is preferably inclined in such a way that, viewed from an outer region of the outer peripheral surface of the door element, it slopes down in the direction of an inner region of the outer peripheral surface of the door element.

When the door element is moved from its open position into its closed position, the wedge surface of the wedge element interacts with the inner peripheral surface of the door aperture that lies opposite the outer peripheral surface of the door element, with the result that the door element is moved from its first position into its second position. The movement of the door element from its first position into its second position is in this case effected in parallel to the movement of the door element from its open position into its closed position, i.e. the door element is moved from its first position progressively in the direction of its second position, the closer the door element gets to its closed position. For this purpose, during a movement of the door element from its open position into its closed position the inner peripheral surface of the door aperture that lies opposite the outer peripheral surface of the door element interacts initially with a portion of the wedge surface of the wedge element that is at a smaller distance from outer peripheral surface of the door element. It is only when the door element is situated almost in its closed position that the inner peripheral surface of the door aperture that lies opposite the outer peripheral surface of the door element interacts with a portion of the wedge surface of the wedge element that is at a greater and/or maximum distance from the outer peripheral surface of the door element. The door element therefore reaches its second position when it is situated in its closed position.

In addition thereto, the activating device also comprises a wedge element, which is fastened to an inner peripheral surface of the door aperture and adapted to interact with an outer peripheral surface of the door element that lies opposite the inner peripheral surface of the door aperture when the door element is situated in its closed position. A wedge surface of the wedge element fastened to the inner peripheral surface of the door aperture that is provided for interacting with the outer peripheral surface of the door element is then preferably inclined in such a way that in an outer region of the inner peripheral surface of the door aperture the wedge surface is at a smaller distance from the inner peripheral surface of the door aperture than in an inner region of the inner peripheral surface of the door aperture.

During a movement of the door element from its open position into its closed position the outer peripheral surface of the door aperture then interacts initially with a portion of the wedge surface of the wedge element that is at a smaller distance from the inner peripheral surface of the door aperture, before the outer peripheral surface comes into contact with a portion of the wedge surface of the wedge element that is at a greater distance from the inner peripheral surface of the door aperture. This similarly guarantees that the door element during its movement from its open position into its closed position is moved progressively from its first position into its second position and the door element reaches its second position when it is situated in its closed position.

The sealing element is preferably configured in the form of a profile seal. The sealing element is moreover preferably made of an elastomer material that is suitable for manufacturing sealing elements.

An aircraft device according to the invention comprises a housing, in which a door aperture is formed. A sealing system as described above seals off the door aperture formed in the housing of the aircraft device from the environment. The aircraft device is preferably an aircraft device that is to be cooled, in particular a cooling chamber. The cooling chamber may be suitable for receiving a trolley, SUs, etc., and may be provided for arrangement in the region of an aircraft galley. The aircraft device to be cooled may be connectable for example to a cooling energy generating device in the form of an air chiller or a cooling energy generating device in the form of a central liquid cooling system. The aircraft device may moreover be provided for integration into an air-over system or an air-through system.

Although the sealing system according to the invention has been described here substantially in connection with an aircraft device that is to be cooled, in particular a cooling chamber that is suitable for receiving a trolley, SUs, etc., the sealing system according to the invention may be used also in other aircraft devices, for example aircraft devices that are to be heated or aircraft devices that are to be sealed in a liquid-tight manner.

There now follows a detailed description of a preferred embodiment of the invention with reference to the accompanying diagrammatic drawings, which show
- Figure 1: an air-over cooling system comprising a cooling chamber and a trolley disposed in the cooling chamber,
- Figures 2a and 2b: three-dimensional representations of a cooling chamber equipped with a sealing system and usable in an air-over cooling system according to Figure 1,
- Figure 3: a detail representation of a sealing element of the cooling chamber according to Figures 2a and 2b in cross section,
- Figure 4: a three-dimensional detail representation of a spring element of a positioning device of the cooling chamber according to Figures 2a and 2b,
- Figures 5a to 5c: three-dimensional detail representations of a first embodiment of an activating device, equipped with a wedge element, of the positioning device of the cooling chamber according to Figures 2a and 2b and
- Figures 6a and 6b: detail representations of a second embodiment of an activating device, equipped with a wedge element, of the positioning device of the cooling chamber according to Figures 2a and 2b in cross section.

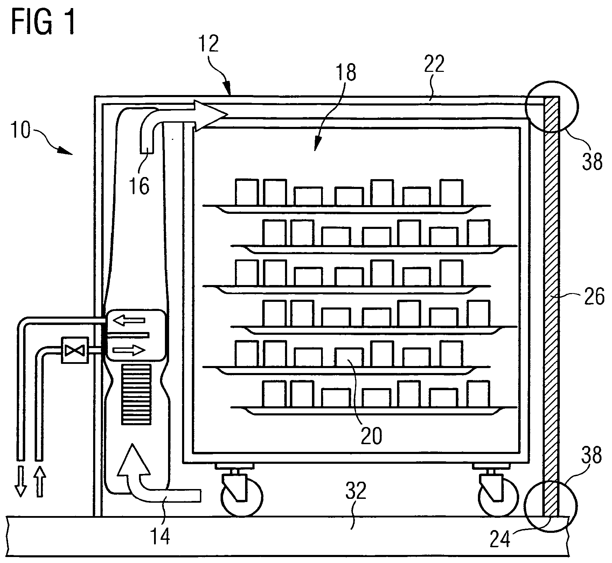

Fig. 1 shows an air-over cooling system 10 provided for use in the region of an aircraft galley and comprising a cooling chamber 12, into which during operation of the air-over cooling system 10 cooling air is supplied through a cooling air inlet 16. The cooling energy for cooling the cooling air is provided by an air chiller, which is not shown in detail in Fig. 1, or by a central liquid cooling system of the aircraft. Discharge air, which has been heated as it flows through the cooling chamber 12, is discharged from the cooling chamber 12 through a discharge air outlet 14. Situated in the cooling chamber 12 is a trolley 18, which is loaded with food 20 that is to be issued to the passengers on board the aircraft and is to be kept cool. The trolley 18 may be introduced into the cooling chamber 12 through a door aperture 24 formed in a housing 22 of the cooling chamber 12.

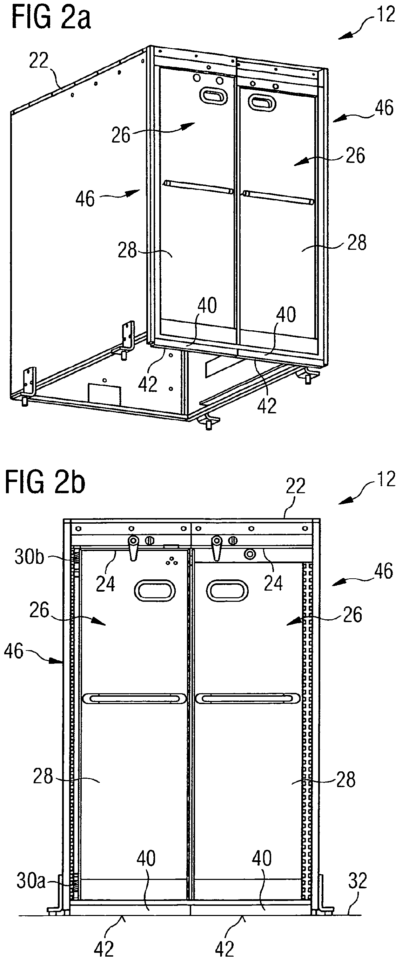

In the embodiment of a cooling chamber 12 shown in Figures 2a and 2b, the cooling chamber 12 is provided with two door apertures 24, through each of which a trolley 18 may be introduced into the cooling chamber. In order to seal off the air-cooled interior of the cooling chamber 12 represented in more detail in Figures 2a and 2b from the environment, each door aperture 24 is sealed off from the environment by means of a sealing system 26, a detailed description of which now follows.

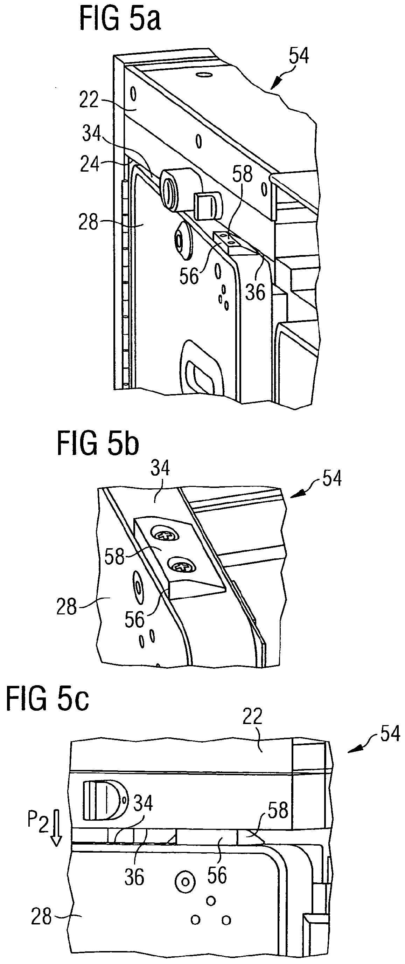

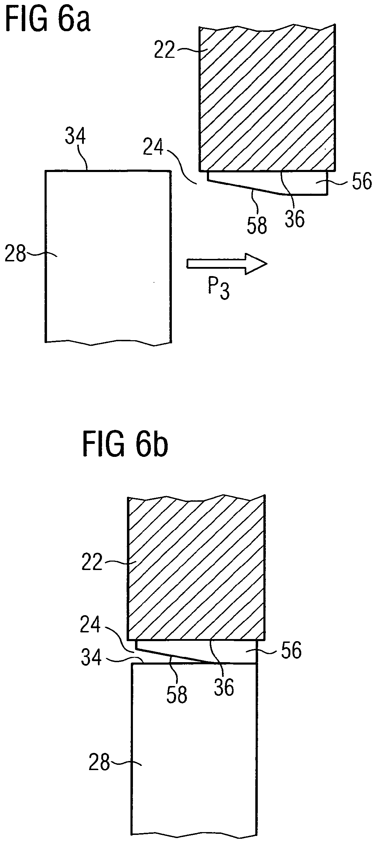

The sealing system 26 comprises a door element 28, which is coupled by two hinge elements 30a, 30b pivotably to the housing 22 of the cooling chamber 12 and is pivotable between an open position and a closed position. In the region of a bottom peripheral edge portion the door element 28 adjoins a floor 32 of an aircraft cabin (see Figures 1 and 2b). In the region of its remaining peripheral edge the door element 28 adjoins the housing 22 of the cooling chamber 12, i.e. an outer peripheral surface 34 of the door element 28 lies opposite an inner peripheral surface 36 of the door aperture 24 formed in the housing 22 of the cooling chamber 12 (see also Figures 5 and 6). In its open position the door element 28 clears the door aperture 24 formed in the housing 22 of the cooling chamber 12. In its closed position, on the other hand, the door element 28 closes the door aperture 24 formed in the housing 22 of the cooling chamber 12.

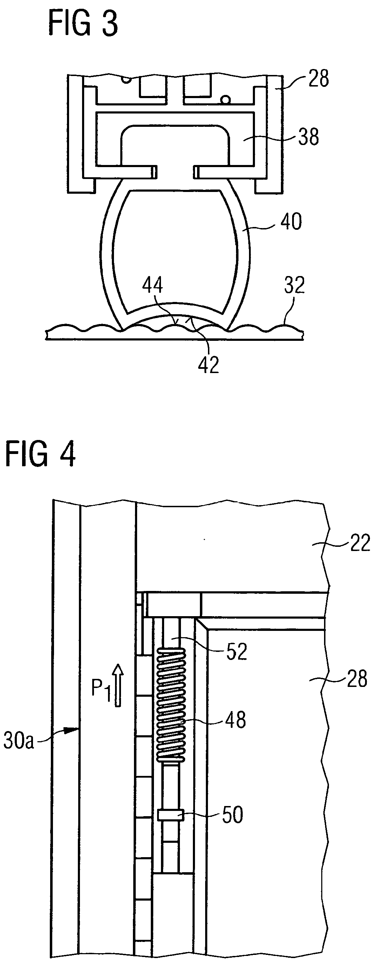

In the region of its bottom peripheral edge portion adjoining the floor 32 of an aircraft cabin the door element 28 comprises a receiving device 38 that is represented in Figure 3 and is used to fasten a sealing element 40, which is configured in the form of a profile seal and made of a suitable elastomer material, to the door element 28. The sealing element 40 extends along the entire length of the bottom peripheral edge portion of the door element 28 adjoining the floor 32 of the aircraft cabin. Formed on the sealing element 40 is a sealing surface 42. The sealing surface 42 formed on the sealing element 40 is provided for interacting with a contact surface 44 that is formed by a portion of the aircraft cabin floor 32. When the door element 28 is situated in its closed position, the door aperture 24 formed in the housing 22 of the cooling chamber 12 is sealed off from the environment by means of the interaction of the sealing surface 42 formed on the sealing element 40 with the contact surface 44.

The sealing system 26 further comprises a positioning device 46, a detailed description of which now follows. The positioning device 46 is used to move the door element 28 substantially at right angles to the sealing surface 42 of the sealing element 40 and to the contact surface 44 formed by a corresponding portion of the aircraft cabin floor 32, between a first position and a second position. When the door element 28 is situated in its first position, the sealing surface 42 of the sealing element 40 is disposed at a distance from the cabin floor 32 and is consequently not movable into sealing contact with the contact surface 44. When, on the other hand, the door element 28 is situated in its second position, the sealing surface 42 of the sealing element 40 may interact sealingly with the contact surface 44 and hence effect a sealing-off of the air-cooled interior of the cooling chamber 12 from the environment.

The positioning device 46 comprises a spring element 48, which is represented in detail in Figure 4. In the embodiment shown in Figure 4, the spring element 48 is configured in the form of a spiral spring, the first end of which is supported against a bearing element 50 of the hinge element 30a that is connected to the housing 22 of the cooling chamber 12. A second end of the spring element 48 is supported, on the other hand, against a further bearing element 52 of the hinge element 30a that is connected to the door element 28. The spring element 48 that is clamped between the bearing elements 50, 52 therefore exerts on the bearing elements 50, 52 a spring force, by means of which the further bearing element 52 fastened to the door element 28 is pushed in the direction of the arrow P₁ shown in Figure 4 away from the bearing element 50 fastened to the housing 22 of the cooling chamber 12. The spring force provided by the spring element 48 therefore brings about a movement of the door element 28 relative to the housing 22 of the cooling chamber 12 in the direction of the arrow P₁, i.e. a lifting movement of the door element 28 relative to the housing 22 of the cooling chamber 12.

In principle, it is possible to provide only one of the hinge elements 30a, 30b with a spring element 48. Preferably, however, both hinge elements 30a, 30b are equipped with a spring element 48. As an alternative to the spring element 48, however, any other suitable device, for example a mechanical device, such as for example a rising butt hinge or a pneumatic or a hydraulic device may be used to bring about the previously described lifting movement of the door element 28 relative to the housing 22 of the cooling chamber 12.

The positioning device 46 further comprises an activating device 54. The activating device 54, which is represented in detail in Figures 5a to 5c and 6a to 6b, is used to exert on the door element 28 a force that is opposed to the spring force of the spring element 48. In other words, the activating device 54 brings about a lowering movement of the door element 28 relative to the housing 22 of the cooling chamber 12.

In a first embodiment that is represented in Figures 5a to 5c, the activating device 54 comprises a wedge element 56 that is fastened to an outer peripheral surface 34 of the door element 28. A wedge surface 58 of the wedge element 56 is inclined in such a way that in an outer region of the outer peripheral surface 34 of the door element 28 the wedge surface 58 is at a greater distance from the outer peripheral surface 34 of the door element 28 than in an inner region of the outer peripheral surface 34 of the door element 28. Figure 5b however shows that the wedge surface 58 does not have a uniform inclination relative to the outer peripheral surface 54 of the door element 28. Rather, the wedge surface 58 of the wedge element 56 is inclined only in an inner region of the outer peripheral surface 34 of the door element 28. In an outer region of the outer peripheral surface 34 of the door element 28, on the other hand, the wedge surface 58 of the wedge element 56 extends substantially parallel to the outer peripheral surface 34 of the door element 28.

There now follows a description of the mode of operation of the positioning device 46. So long as the door element 28 is situated in its open position, in which the door element 28 clears the door aperture 24 formed in the housing 22 of the cooling chamber 12, the door element 28 is held by the force of the spring element 48 in its first position, in which it is raised relative to the housing 22 of the cooling chamber 12. When the door element 28 is situated in its first position, the sealing surface 42 of the sealing element 40 is also raised relative to the floor 32 of the aircraft cabin, i.e. the sealing surface 42 of the sealing element 40 is situated at a distance from the floor 32 of the aircraft cabin that is defined by the spring excursion of the spring 48. The establishment of a sealing contact between the sealing surface 42 of the sealing element 40 and the contact surface 44 formed by a sub-portion of the aircraft cabin floor 32 is therefore not possible. Instead, during a movement of the door element 28 the sealing surface 42 of the sealing element 40 is prevented from sweeping over the aircraft cabin floor 32. As a result, the wear of the sealing element 40 during operation of the cooling chamber 12 may be significantly reduced.

When the door element 28 moves from its open position into its closed position, in which the door element 28 closes the door aperture 24 formed in the housing 22 of the cooling chamber 12, the wedge element 56 fastened to the outer peripheral surface 34 of the door element 28 comes into contact with the inner peripheral surface 36 of the door aperture 24 formed in the housing 22 of the cooling chamber 12. In particular, the inner peripheral surface 36 of the door aperture 24 comes into contact initially with a portion of the wedge surface 58 of the wedge element 56 that is situated at a smaller distance from the outer peripheral surface 34 of the door element 28. During a further movement of the door element 28 into its closed position, the wedge surface 58 of the wedge element 56 slides along the inner peripheral surface 36 of the door aperture 24.

As a result of the interacting of the wedge surface 58 of the wedge element 56 with the inner peripheral surface 36 of the door aperture 24, on the door element 28 a force oriented in the direction of the arrow P₂ in Figure 5c is exerted, which is opposed to the spring force of the spring element 48 and brings about a lowering of the door element 28 relative to the housing 22 of the cooling chamber 12. Once the door element 28 has reached its final closed position, the portion of the wedge surface 58 of the wedge element 56 that extends parallel to the outer peripheral surface 34 of the door element 28 lies against the inner peripheral surface 36 of the door aperture 24. As a result of the interacting of these two surfaces, the door element 28 is held in its second position, in which it is lowered relative to the housing 22 of the cooling chamber 12.

When the door element 28 is situated in its second position, the sealing element 40 is pressed against the floor 32 of the aircraft cabin. In other words, the sealing surface 42 of the sealing element 40 is situated in sealing contact with the contact surface 44 that is formed by a portion of the aircraft cabin floor 32 that lies opposite the sealing surface 42 of the sealing element 40. A proper sealing of the air-cooled interior of the cooling chamber 12 is therefore guaranteed.

Figures 6a and 6b show a further embodiment of an activating device 54, which likewise comprises a wedge element 56 with an, at least in sections, inclined wedge surface 58. Here, however, the wedge element 56 is fastened, not to the outer peripheral surface 34 of the door element 28, but to the inner peripheral surface 36 of the door aperture 24 formed in the housing 22 of the cooling chamber 12. The wedge surface 58 of the wedge element 56 is inclined in such a way that in an outer region of the inner peripheral surface 36 of the door aperture 24 the wedge surface 58 is at a smaller distance from the inner peripheral surface 36 of the door aperture 24 than in an inner region of the inner peripheral surface 36 of the door aperture 24. The wedge surface 58 of the wedge element 56 moreover likewise comprises a portion that extends substantially parallel to the inner peripheral surface 36 of the door aperture 24. Here, however, this portion lies opposite an inner region of the inner peripheral surface 36 of the door aperture 24.

When the door element 28 is moved from its open position into its closed position, as represented diagrammatically in Figure 6a by the arrow P₃, the outer peripheral surface 34 of the door element 28 interacts with the wedge surface 58 and is therefore progressively lowered relative to the housing 22 of the cooling chamber 12 counter to the force exerted by the spring element 48 on the door element 28. Once the door element 28 has reached its closed position represented in Figure 6b, the outer peripheral surface 34 of the door element 28 lies against the portion of the wedge surface 58 of the wedge element 56 that extends parallel to the inner peripheral surface 36 of the door aperture 24. The door element 28 in its closed position is therefore held in its lowered second position and the sealing surface 42 of the sealing element 40 is pressed against the contact surface 44, which is formed likewise by a portion of the aircraft cabin floor 32 that lies opposite the sealing surface 42 of the sealing element 40.

## Claims

1. Sealing system (26) for use in an aircraft device that is to be sealed off from the environment, comprising:
- a door element (28), which is connectable to a housing (22) of the aircraft device and in the state of connection to the housing (22) of the aircraft device is movable between an open position, in which the door element (28) clears a door aperture (24) formed in the housing (22) of the aircraft device, and a closed position, in which the door element (28) closes the door aperture (24) formed in the housing (22) of the aircraft device,
- a sealing element (40), on which a sealing surface (42) is formed, wherein the sealing surface (42) of the sealing element (40) is adapted to interact sealingly with a contact surface (44) when the door element (28) is situated in its closed position, and
- a positioning device (46), which is adapted to move the door element (28) substantially at right angles to the sealing surface (42) of the sealing element (40) or to the contact surface (44) between a first position, in which the sealing surface (42) of the sealing element (40) is not in sealing contact with the contact surface (44), and a second position, in which the sealing surface (42) of the sealing element (40) is in sealing contact with the contact surface (44), wherein the positioning device (46) comprises an activating device (54), which is adapted to exert on the door element (28) a force, by means of which the door element (28) is moved towards the sealing surface (42) of the sealing element (40) or towards the contact surface (44) and the activating device (54) comprises a wedge element (56), which is fastened to an outer peripheral surface (34) of the door element (28) and adapted to interact with an inner peripheral surface (36) of the door aperture (24) that lies opposite the outer peripheral surface (34) of the door element (28) when the door element (28) is situated in its closed position,
**characterized in that** the activating device (54) further comprises a wedge element (56), for being fastened to an inner peripheral surface (36) of the door aperture (24) and adapted to interact with an outer peripheral surface (34) of the door element (28) that lies opposite the inner peripheral surface (36) of the door aperture (24) when the door element (28) is situated in its closed position.

2. Sealing system according to claim 1,
**characterized in that** the positioning device (46) is adapted to move the door element (28), during a movement of the door element (28) between its open position and its closed position, substantially at right angles to the sealing surface (42) of the sealing element (40) or to the contact surface (44).

3. Sealing system according to claim 1 or 2,
**characterized in that** the positioning device (46) comprises a spring element (48), which is adapted to exert on the door element (28) a spring force, by means of which the door element (28) is moved away from the sealing surface (42) of the sealing element (40) or from the contact surface (44).

4. Sealing system according to claim 1,
**characterized in that** a wedge surface (58) of the wedge element (56) fastened to the outer peripheral surface (34) of the door element (28) that is provided for interacting with the inner peripheral surface (36) of the door aperture (24) is inclined in such a way that in an outer region of the outer peripheral surface (34) of the door element (28) the wedge surface (58) is at a greater distance from the outer peripheral surface (34) of the door element (28) than in an inner region of the outer peripheral surface (34) of the door element (28).

5. Sealing system according to claim 1,
**characterized in that** a wedge surface (58) of the wedge element (56) fastened to the inner peripheral surface (36) of the door aperture (24) that is provided for interacting with the outer peripheral surface (34) of the door element (28) is inclined in such a way that in an outer region of the inner peripheral surface (36) of the door aperture (24) the wedge surface (58) is at a smaller distance from the inner peripheral surface (36) of the door aperture (24) than in an inner region of the inner peripheral surface (36) of the door aperture (24).

6. Sealing system according to one of claims 1 to 5,
**characterized in that** the sealing element (40) is configured in the form of a profile seal.

7. Aircraft device comprising:
- a housing (22), in which a door aperture (24) is formed, and
- a sealing system (26) according to one of claims 1 to 6, which seals off the door aperture (24) formed in the housing (22) of the aircraft device from the environment, wherein the aircraft device is preferably an aircraft device that is to be cooled, in particular a cooling chamber (12) that is suitable for example for receiving a trolley (18).

## Patentansprüche

1. Abdichtungssystem (26) zur Verwendung in einer gegenüber der Umgebung abzudichtenden Flugzeugeinrichtung mit:
- einem Türelement (28), das mit einem Gehäuse (22) der Flugzeugeinrichtung verbindbar ist und im mit dem Gehäuse (22) der Flugzeugeinrichtung verbundenen Zustand zwischen einer Offenstellung, in der das Türelement (28) eine in dem Gehäuse (22) der Flugzeugeinrichtung ausgebildete Türöffnung (24) freigibt, und einer Schließstellung bewegbar ist, in der das Türelement (28) die in dem Gehäuse (22) der Flugzeugeinrichtung ausgebildete Türöffnung (24) verschließt,
- einem Dichtelement (40), an dem eine Dichtfläche (42) ausgebildet ist, wobei die Dichtfläche (42) des Dichtelements (40) dazu eingerichtet ist, abdichtend mit einer Anlagefläche (44) zusammenzuwirken, wenn sich das Türelement (28) in seiner Schließstellung befindet, und
- einer Positionierungseinrichtung (46), die dazu eingerichtet ist, das Türelement (28) im Wesentlichen senkrecht zu der Dichtfläche (42) des Dichtelements (40) oder der Anlagefläche (44) zwischen einer ersten Stellung, in der die Dichtfläche (42) des Dichtelements (40) nicht mit der Anlagefläche (44) in Dichtkontakt steht, und einer zweiten Stellung zu bewegen, in der die Dichtfläche (42) des Dichtelements (40) mit der Anlagefläche (44) in Dichtkontakt steht, wobei die Positionierungseinrichtung (46) eine Aktivierungseinrichtung (54) umfasst, die dazu eingerichtet ist, eine Kraft auf das Türelement (28) aufzubringen, durch die das Türelement (28) auf die Dichtfläche (42) des Dichtelements (40) oder die Anlagefläche (44) zu bewegt wird, und die Aktivierungseinrichtung (54) ein Keilelement (56) umfasst, das an einer Außenumfangsfläche (34) des Türelements (28) befestigt und dazu eingerichtet ist, mit einer der Außenumfangsfläche (34) des Türelements (28) gegenüberliegenden Innenumfangsfläche (36) der Türöffnung (24) zusammenzuwirken, wenn sich das Türelement (28) in seiner Schließstellung befindet,
**dadurch gekennzeichnet, dass** die Aktivierungseinrichtung (54) ferner ein Keilelement (56) umfasst, das zur Befestigung an einer Innenumfangsfläche (36) der Türöffnung (24) vorgesehen und dazu eingerichtet ist, mit einer der Innenumfangsfläche (36) der Türöffnung (24) gegenüberliegenden Außenumfangsfläche (34) des Türelements (28) zusammenzuwirken, wenn sich das Türelement (28) in seiner Schließstellung befindet.

2. Abdichtungssystem nach Anspruch 1,
**dadurch gekennzeichnet, dass** die Positionierungseinrichtung (46) dazu eingerichtet ist, das Türelement (28) bei einer Bewegung des Türelements (28) zwischen seiner Offenstellung und seiner Schließstellung im Wesentlichen senkrecht zu der Dichtfläche (42) des Dichtelements (40) oder der Anlagefläche (44) zu bewegen.

3. Abdichtungssystem nach Anspruch 1 oder 2,
**dadurch gekennzeichnet, dass** die Positionierungseinrichtung (46) ein Federelement (48) umfasst, das dazu eingerichtet ist, eine Federkraft auf das Türelement (28) aufzubringen, durch die das Türelement (28) von der Dichtfläche (42) des Dichtelements (40) oder der Anlagefläche (44) weg bewegt wird.

4. Abdichtungssystem nach Anspruch 1,
**dadurch gekennzeichnet, dass** eine zum Zusammenwirken mit der Innenumfangsfläche (36) der Türöffnung (24) vorgesehene Keilfläche (58) des an der Außenumfangsfläche (34) des Türelements (28) befestigten Keilelements (56) derart geneigt ist, dass die Keilfläche (58) in einem äußeren Bereich der Außenumfangsfläche (34) des Türelements (28) einen größeren Abstand von der Außenumfangsfläche (34) des Türelements (28) hat als in einem inneren Bereich der Außenumfangsfläche (34) des Türelements (28).

5. Abdichtungssystem nach Anspruch 1,
**dadurch gekennzeichnet, dass** eine zum Zusammenwirken mit der Außenumfangsfläche (34) des Türelements (28) vorgesehene Keilfläche (58) des an der Innenumfangsfläche (36) der Türöffnung (24) befestigten Keilelements (56) derart geneigt ist, dass die Keilfläche (58) in einem äußeren Bereich der Innenumfangsfläche (36) der Türöffnung (24) einen kleineren Abstand von der Innenumfangsfläche (36) der Türöffnung (24) hat als in einem inneren Bereich der Innenumfangsfläche (36) der Türöffnung (24).

6. Abdichtungssystem nach einem der Ansprüche 1 bis 5,
**dadurch gekennzeichnet, dass** das Dichtelement (40) in Form einer Profildichtung ausgebildet ist.

7. Flugzeugeinrichtung mit:
- einem Gehäuse (22), in dem eine Türöffnung (24) ausgebildet ist, und
- einem Abdichtungssystem (26) nach einem der Ansprüche 1 bis 6, das die in dem Gehäuse (22) der Flugzeugeinrichtung ausgebildete Türöffnung (24) gegenüber der Umgebung abdichtet, wobei es sich bei der Flugzeugeinrichtung vorzugsweise eine zu kühlende Flugzeugeinrichtung, insbesondere eine beispielsweise zur Aufnahme eines Trolleys (18) geeignete Kühlkammer (12) handelt.

## Revendications

1. Système d'isolement (26) destiné à une utilisation dans un dispositif d'aéronef qui doit être isolé de l'environnement, comprenant :
- un élément de porte (28), qui peut être relié à un logement (22) du dispositif d'aéronef et, dans l'état de liaison au logement (22) du dispositif d'aéronef, peut être déplacé entre une position ouverte, dans laquelle l'élément de porte (28) libère une ouverture de porte (24) formée dans le logement (22) du dispositif d'aéronef, et une position fermée, dans laquelle l'élément de porte (28) ferme l'ouverture de porte (24) formée dans le logement (22) du dispositif d'aéronef,
- un élément d'isolement (40), sur lequel une surface d'isolement (42) est formée, dans lequel la surface d'isolement (42) de l'élément d'isolement (40) est adaptée pour interagir de manière isolée avec une surface de contact (44) lorsque l'élément de porte (28) est situé dans sa position fermée, et
- un dispositif de positionnement (46), qui est adapté pour déplacer l'élément de porte (28) essentiellement au niveau des angles droits sur la surface d'isolement (42) de l'élément d'isolement (40) ou sur la surface de contact (44) entre une première position, dans laquelle la surface d'isolement (42) de l'élément d'isolement (40) ne se trouve pas en contact isolé avec la surface de contact (44), et une seconde position, dans laquelle la surface d'isolement (42) de l'élément d'isolement (40) se trouve en contact isolé avec la surface de contact (44), dans lequel le dispositif de positionnement (46) comprend un dispositif d'activation (54), qui est adapté pour exercer une force sur l'élément de porte (28), au moyen de laquelle l'élément de porte (28) est déplacé vers la surface d'isolement (42) de l'élément d'isolement (40) ou vers la surface de contact (44), et le dispositif d'activation (54) comprend un élément de coin (56), qui est fixé à une surface périphérique externe (34) de l'élément de porte (28) et adapté pour interagir avec la surface périphérique interne (36) de l'ouverture de porte (24) qui se trouve à l'opposé de la surface périphérique externe (34) de l'élément de porte (28) lorsque l'élément de porte (28) est situé dans sa position fermée,
**caractérisé en ce que** le dispositif d'activation (54) comprend en outre un élément de coin (56), étant fixé à une surface périphérique interne (36) de l'ouverture de porte (24) et adapté pour interagir avec une surface périphérique externe (34) de l'élément de porte (28) qui se trouve à l'opposé de la surface périphérique interne (36) de l'ouverture de porte (24) lorsque l'élément de porte (28) est situé dans sa position fermée.

2. Système d'isolement selon la revendication 1,
**caractérisé en ce que** le dispositif de positionnement (46) est adapté pour déplacer l'élément de porte (28), pendant un mouvement de l'élément de porte (28) entre sa position ouverte et sa position fermée, essentiellement au niveau des angles droits sur la surface d'isolement (42) de l'élément d'isolement (40) ou sur la surface de contact (44).

3. Système d'isolement selon la revendication 1 ou 2,
**caractérisé en ce que** le dispositif de positionnement (46) comprend un élément de ressort (48), qui est adapté pour exercer une force de ressort sur l'élément de porte (28), au moyen de laquelle l'élément de porte (28) est éloigné de la surface d'isolement (42) de l'élément d'isolement (40), ou de la surface de contact (44).

4. Système d'isolement selon la revendication 1,
**caractérisé en ce qu'**une surface de coin (58) de l'élément de coin (56) fixée à la surface périphérique externe (34) de l'élément de porte (28) qui est fournie pour interagir avec la surface périphérique interne (36) de l'ouverture de porte (24) est inclinée de telle sorte que dans une région externe de la surface périphérique externe (34) de l'élément de porte (28), la surface de coin (58) se trouve à une distance plus grande de la surface périphérique externe (34) de l'élément de porte (28) que dans une région interne de la surface périphérique externe (34) de l'élément de porte (28).

5. Système d'isolement selon la revendication 1,
**caractérisé en ce qu'**une surface de coin (58) de l'élément de coin (56) fixée à la surface périphérique interne (36) de l'ouverture de porte (24) qui est fournie pour interagir avec la surface périphérique externe (34) de l'élément de porte (28) est inclinée de telle sorte que dans une région externe de la surface périphérique interne (36) de l'ouverture de porte (24), la surface de coin (58) se trouve à une distance plus petite de la surface périphérique interne (36) de l'ouverture de porte (24) que dans une région interne de la surface périphérique interne (36) de l'ouverture de porte (24).

6. Système d'isolement selon l'une des revendications 1 à 5,
**caractérisé en ce que** l'élément d'isolement (40) est configuré sous la forme d'un joint profilé.

7. Dispositif d'aéronef comprenant :
- un logement (22), dans lequel une ouverture de porte (24) est formée, et
- un système d'isolement (26) selon l'une des revendications 1 à 6, qui ferme hermétiquement l'ouverture de porte (24) formée dans le logement (22) du dispositif d'aéronef par rapport à l'environnement, dans lequel le dispositif d'aéronef est de préférence un dispositif d'aéronef à refroidir, en particulier une chambre de refroidissement (12) qui est appropriée par exemple pour recevoir un chariot (18).
